(19) Europäisches Patentamt
European Patent Office
Office européen des brevets

(11) Numéro de publication : 0 245 139 B1

# (12) FASCICULE DE BREVET EUROPEEN

(45) Date de publication du fascicule du brevet : 28.08.91 Bulletin 91/35

(51) Int. Cl.$^5$ : C09J 139/06, B32B 27/08

(21) Numéro de dépôt : 87400882.4

(22) Date de dépôt : 16.04.87

## (54) Composite polyfluorure de vinylidène-polymère non compatible, procédé de fabrication du composite.

(30) Priorité : 28.04.86 FR 8606092

(43) Date de publication de la demande : 11.11.87 Bulletin 87/46

(45) Mention de la délivrance du brevet : 28.08.91 Bulletin 91/35

(84) Etats contractants désignés : BE DE FR GB IT NL SE

(56) Documents cités :
US-A- 3 424 638
US-A- 4 295 910

(73) Titulaire : ATOCHEM
4 & 8, Cours Michelet La Défense 10
F-92800 Puteaux (FR)

(72) Inventeur : Nawrot, Serge
Rue Marceau Boulay
F-27470 Serquigny (FR)
Inventeur : Parsy, Roland
Rue de Beaumésnil
F-27170 Beaumont le Roger (FR)
Inventeur : Rivas, Nasine
Rue des Jonquilles Cedex 2807
F-27670 Saint-Ouen du Tilleul (FR)

(74) Mandataire : Foiret, Claude et al
ATOCHEM Département Propriété Industrielle
F-92091 Paris la Défense 10 Cédex 42 (FR)

EP 0 245 139 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un composite polyfluorure de vinylidène (PVDF) - polymère non compatible. Ce composite est caractérisé en ce que les interfaces des deux polymères sont liées entre elles par un polymère résultant de la polymérisation d'un composé de formule $M-CH=CH_2$,compatible avec le polymère à faire adhérer au PVDF, M étant un radical hétérocyclique monovalent dérivant de la pyrrolidone par perte d'un atome d'hydrogène. L'invention concerne également le procédé de fabrication du composite consistant à polymériser une composition à base du un composé vinylique cité au contact des deux polymères.

Le PVDF est connu pour être un matériau difficile à faire adhérer à un substrat. Aussi de nombreuses solutions ont-elles été proposées, dont l'une des plus efficaces est d'interposer entre le substrat et le PVDF au moins un polymère compatible avec le PVDF. Les polymères compatibles connus sont ceux possédant dans leurs molécules des groupements carbonyles ramifiés sur la chaîne. C'est ainsi que dans les FR 2.457.180, 1.484.153 et 2.545.040 sont respectivement utilisés le polyméthacrylate de méthyle, les copolymères éthylène-acétate de vinyle, les copolymères éthylène-acétate de vinyle additionnés d'un polymère d'acétate de vinyle. Il est également connu du brevet des Etats-Unis d'Amérique 3.541.039 de plastifier le PVDF avec les polyesters, ce qui laisse supposer un minimum d'interactions entre le PVDF et les groupements esters.

Toutes ces techniques, donnant de plus ou moins bons résultats, présentent l'inconvénient de nécessiter, s'agissant de polymères servant de liant d'adhérisation, l'utilisation d'un solvant toujours délicat à éliminer totalement, ou, la compression des différents matériaux à une température au moins voisine de celle du point de fusion du polymère d'adhérisation ce qui peut nuire à l'aspect de surface de matériaux finis à lier ensemble.

Selon l'invention, le composé vinylique étant polymérisée in situ entre le PVDF et le polymère non compatible avec lui, la liaison peut s'effectuer à une température nettement inférieure à leur point de fusion et en tout état de cause en l'absence de solvant. Cette température est comprise entre 20 et 180°C. et mieux entre 60 et 160°C.

Du brevet des Etats-Unis d'Amérique 3.424.638 il ressort que l'emploi de la N-vinyl-2-pyrrolidone en association avec de l'acide acrylique est connue dans les compositions adhésives utilisables pour faire adhérer certains matériaux thermoplastiques dont le polytétrafluoroéthylène, mais que, lorsqu'elle est utilisée seule comme agent d'adhésion, son pouvoir d'adhésion est des plus mauvais. De même dans le brevet des Etats-Unis d'Amérique 4.295.910, il est envisagé d'associer, en tant qu'additif, quelques pour cent d'une N-alkylpyrrolidone à un copolymère acétate de vinyle-éthylène en émulsion lui-même entrant, avec un polyisocyanate organique, dans la formulation d'une composition adhésive. Là encore il ressort que la N-alkylpyrrolidone ne peut à elle seule être retenue comme agent d'adhésion, en particulier du PVDF avec un polymère qui lui est incompatible.

Le composé vinylique $M-CH=CH_2$, compatible avec le polymère à faire adhérer au PVDF, répond plus précisement à la formule

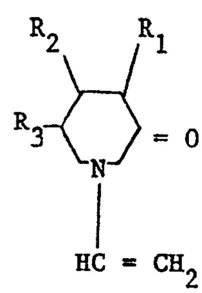

dans laquelle $R_1$, $R_2$, $R_3$, identiques ou différents représentent l'hydrogène ou un radical alkyle contenant de 1 à 4 atomes de carbone.

Parmi les composés vinyliques préférés on peut citer la N-vinylpyrrolidone, la N-vinyl-méthyl-3-pyrrolidone, la N- vinylméthyl-5-pyrrolidone, et, la N-vinyléthyl-5-pyrrolidone. Il n'est pas exclu d'associer plusieurs composés vinyliques dans la composition polymérisable tels que les acrylates et méthacrylates fluorés du type $C_q F_{2q+1} - C_2H_4 - O - C - O - CH = CH_2$ avec $2 \leqq q \leqq 16$.

Pour réaliser l'objet de l'invention au composé vinylique est associé un amorceur habituel de polymérisation radicalaire. Ce peuvent être des amorceurs thermiques comme l'azobisdibutyronitrile ou le péroxyde de lauroyle pour citer les plus connus, ou encore des amorceurs photochimiques comme l'(hydroxy -1-cyclohexyl)-phénylcétone. Ces amorceurs n'excédent généralement pas 10 % en poids de la composition polymérisable.

Afin d'améliorer les propriétés d'adhésion en atmosphère humide du composé vinylique il est recommandé

de lui associer, en tant qu'ajout de réticulation au moins un composé à fonctionnalité acrylique ou méthacrylique, ou encore allylique en quantité pouvant aller jusqu'à 30 parties en poids pour 100 du composé $M\text{-}CH = CH_2$.

Les composés à fonctionnalité acrylique ou méthacrylique, ou encore allylique sont choisis parmi les composés insaturés répondant respectivement aux formules générales suivantes

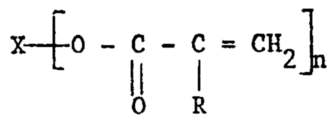

ou

$$Z \!-\!\!\left[ Y - CH_2 - CH = CH_2 \right]_n$$

dans lesquelles
R représente un atome d'hydrogène ou un radical méthyle
X et Z représentent un groupement constitué de C, H, et éventuellement d'un ou plusieurs atomes choisis parmi N, O, P, S, Si, F, Cl, I
Y représente un atome choisi parmi N, O, P, S
et $2 \leqq n \leqq 4$.

Parmi ces composés on peut citer à titre d'exemple les diacrylates ou diméthacrylates d'alcoylène glycol de formule

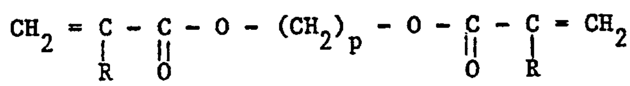

dans laquelle R est tel que défini précédemment, et, p est un nombre entier compris entre 2 et 36 tel le diacrylate ou diméthacrylate d'hexanediol, le diacrylate ou diméthacrylate de butanediol, le diacrylate ou diméthacrylate de dodécanediol. On peut encore citer les polyacrylates ou polyméthacrylates de polyhydroxyalcoyle comme le triméthacrylate de pentaérythritol ou le triméthacrylate de triméthylolpropane, les diacrylates ou diméthacrylates de résines époxydes dérivant du bisphénol A, les acrylates et méthacrylates fluorés du type

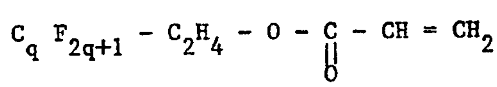 avec $2 \leq q \leq 16$

Dans la famille des composés allyliques on peut citer le triallylcyanurate, les composés dans lesquels Z représente un segment perfluoro-alkylé du type $C_qF_{2q+1}$ - avec $2 \leqq q \leqq 16$.

Bien entendu tous ces composés à fonctionnalité acrylique, méthacrylique ou allylique peuvent être utilisés seuls ou en mélange.

Le composé vinylique $M - CH = CH_2$ peut être diluée avec un tiers monomère dont l'homopolymère est compatible avec le PVDF ou le polymère non compatible avec le PVDF.

Par PVDF on entend non seulement l'homopolymère de fluorure de vinylidène, mais encore les copolymères contenant au moins 70 % en poids de groupements fluorure de vinylidène. De même, dans l'expression polymère non compatible sont également compris les copolymères non compatibles. L'invention s'applique particulièrement à la fabrication en continu ou discontinu de composite PVDF - polystyrène et PVDF - polychlorure de vinyle.

La mise en oeuvre du composé vinylique $M - CH = CH_2$ s'effectue de façon classique. Le mélange du composé vinylique avec l'amorceur de polymérisation, et éventuellement l'agent de réticulation, est déposé sur une des surfaces du PVDF et/ou du polymère non compatible. Les deux matériaux à unir sont mis en contact intime sous pression d'environ 1 à 5 bars à la température et durant les temps suffisants à la polymérisation du composé vinylique.

Un autre procédé préféré consiste à irradier par rayonnement ultraviolet les matériaux à unir après que le composé vinylique ait été mis en contact intime avec eux. Ce contact est effectué par mise sous pression d'environ 1 à 5 bars à des températures d'environ 20 à 180°C du PVD et du polymère non compatible entre lesquels est placé le mélange du composé vinylique avec l'amorceur de polymérisation. Une post-cuisson éventuelle de la composition irradiée permet la libération des macroradicaux piégés et la polymérisation des monomères résiduels.

Les exemples suivants illustrent l'invention sans toutefois la limiter.

Exemple 1

Un mélange en poids de 100 parties de N-vinylpyrrolidone et de 5 parties de photoamorceur (hydroxy-1-cyclohexyl)-phénylcétone (Irgacure 184) est versé sur la surface d'une éprouvette de polystyrène de dimensions 125 x 25 x 3 mm. La plage enduite de l'éprouvette forme un carré de 25 mm. de côté, le dépôt de mélange ne dépassant pas 100 microns. L'éprouvette est recouverte d'un film de PVDF (Foraflon) de 120 mm de long, 25 mm de large et 100 microns d'épaisseur. Le composite formé est mis sous presse à 150°C et maintenu sous 2 bars pendant 5 minutes. Le composite est ensuite soumis à une irradiation par rayonnement UV fourni par un appareil PRIMARC. Il subit quatre cycles d'irradiation à vitesse de défilement de 9,1m./min. sous deux lampes à mercure de 1800W. chacune.

L'énergie de pelage mesurée selon la norme ASTM D 903 avec des éprouvettes de dimensions 125 x 25 x 3 mm sur un extensiomètre INSTRON est de 1030 $J/m^2$.

Exemple 2

Un mélange en poids de 100 parties de N-vinylpyrrolidone, 5 parties de photoamorceur (hydroxy-1-cyclohexyl)-phénylcétone (Irgacure 184) et 5 parties de triméthacrylate de triméthylolpropane (Rocryl X 980) est mis en oeuvre dans les conditions de l'exemple 1.

L'énergie de pelage est de 610 $J/m^2$ (échantillon 1)

Les mêmes éprouvettes préparées à partir d'un mélange contenant 10 et 20 parties de triméthacrylate de triméthylolpropane présentent respectivement des énergies de pelage de 510 et 320 $J/m^2$ (échantillon 2 et 3).

Sur ces matériaux on évalue la tenue aux intempéries à long terme par l'essai du cataplasme humide à 75°C.

Cet essai consite à placer le composite dans un manchon de coton hydrophile imbibé d'eau et de placer l'ensemble dans un sachet de polyéthylène hermétiquement clos. Ce sachet est placé dans une étuve maintenue à 75°C. A des temps choisis on mesure l'énergie de pelage du composite.

Les résultats obtenus sont donnés dans la figure 1 annexée.

Exemple 3

Un mélange en poids de 100 parties de N-vinylpyrrolidone, 5 parties de photoamorceur(hydroxy-1-cyclohexyl)-phénylcétone (Irgacure 184) et 2 parties du composé diallylique de formule $C_6F_{13}$ - $C_2H_4$ - $SO_2$ - N ($CH_2$ - CH = $CH_2)_2$ est mis en oeuvre dans les conditions de l'exemple 1.

L'énergie de pelage est de 1160 $J/m^2$ (échantillon 4).

Les mêmes éprouvettes préparées à partir d'un mélange contenant 5 et 20 parties du composé diallylique présentent respectivement des énergies de pelage de 904 $J/m^2$ et 390 $J/m^2$ (échantillons 5 et 6).

Les résultats des essais du cataplasme humide à 75°C sont donnés dans les figures 2 et 3 annexées.

Exemple 4

Deux mélanges en poids de 100 parties de N-vinylpyrrolidone, 5 parties de photoamorceur (hydroxy-1-cyclohexyl)-phénylcétone (Irgacure 184) et 10 parties de butanediol-diacrylate d'une part et 5 parties de triallylcyanurate d'aute part sont mis en oeuvre dans les conditions de l'exemple 1.

Les énergies de pelage sont de :

505 $J/m^2$ pour le composite obtenu à partir du mélange contenant le butanedioldiacrylate

726 $J/m^2$ pour le composite obtenu à partir du mélange contenant le triallylcyanurate.

Exemple 5

Un mélange en poids de 100 parties de N-vinylpyrrolidone, 5 parties de photoamorceur (hydroxy-1-cyclohexyl)-phénylcétone (Irgacure D184) et 2 parties du composé diallylique de formule :

$C_6F_{13} - C_2H_4 - SO_2 - N(CH_2 - CH = CH_2)_2$ est mis en oeuvre dans les conditions de l'exemple 1. Le composite formé est à nouveau mis sous presse à 145° et maintenu sous 2 bars pendant 5 minutes (Echantillon 7). Il est ensuite soumis au test du cataplasme humide décrit dans l'exemple 2. Les résultats sont donnés dans la Figure 4. On constate que la post-cuisson améliore la tenue à court terme et à long terme du composite.

Exemple 6

Un mélange en poids de 100 parties de N-vinylpyrrolidone et de 5 parties de photoarmoceur (hydroxy-1-cyclohexyl)-phénylcétone (Irgacure 184) est versé sur la surface d'une éprouvette de polychlorure de vinyle de dimensions 125 x 25 x 3 mm. La plage enduite de l'éprouvette forme un carré de 25 mm de côté, l'épaisseur du dépôt de mélange ne dépassant pas 100 microns. L'éprouvette est recouverte d'un film de PVDF (Foraflon) de 120 x 25 x 0,1. Le composite formé est mis sous presse à 100°C et maintenu sous 2 bars pendant 5 minutes. Le composite est ensuite soumis à une Irradiation par rayonnement UV fourni par un appareil PRIMARC. Il subit quatre cycles d'irradiation à vitesse de défilement de 9,1 m/min. sous 2 lampes à mercure de 1800 W chacune.

L'énergie de pelage est de 1310 J/m². Le pelage conduit au déchirement du film de PVDF.

## Revendications

1. Matériau composité constitué d'une couche de polyfluorure de vinylidène et d'une couche de polymère non compatible avec le polyfluorure de vinylidène caractérisé en ce que les deux couches sont liées par un polymère résultant de la polymérisation d'un composé vinylique, compatible avec le polymère à faire adhérer au polyfluorure de vinylidène, de formule

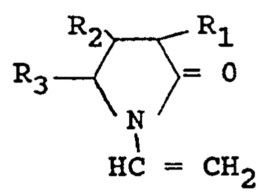

dans laquelle $R_1$, $R_2$, $R_3$, identiques ou différents, représentent l'hydrogène ou un radical alkyle contenant de 1 à 4 atomes de carbone.

2. Matériau selon la revendication 1 caractérisé en ce que les deux couches sont liées par un copolymère résultant de la copolymérisation du composé vinylique et d'un agent de réticulation choisi parmi les composés de formules :

$$X \left[ O - \underset{\underset{O}{\|}}{C} - \underset{\underset{R}{|}}{C} = CH_2 \right]_n$$

ou

$$Z \left[ Y - CH_2 - CH = CH_2 \right]_n$$

dans lesquelles :

R représente un atome d'hydrogène ou un radical méthyle

Y et Z représentent un groupement constitué de C, H et éventuellement d'un ou plusieurs atomes choisis parmi N, O, P, S, Si, F, Cl, I

Y représente un atome choisi parmi N, O, P, S

et $2 \leq n \leq 4$

3. Matériau selon la revendication 2 caractérisé en ce que le produit de copolymérisation résulte de la copolymérisation de 0 à 30 parties en poids d'agent de réticulation pour 100 parties en poids du composé vinylique.

4. Procédé de fabrication d'un matériau composite constitué d'une couche de polyfluorure de vinylidène et d'une couche de polymère non compatible avec le polyfluorure de vinylidène caractérisé en ce qu'on polymérise in situ entre les deux couches à faire adhérer, associé à un amorceur de polymérisation, [une composition à base de] un composé vinylique de formule

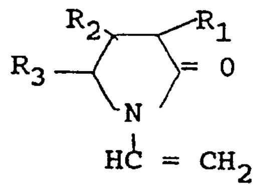

dans laquelle $R_1$, $R_2$, $R_3$, identiques ou différents représentent l'hydrogène ou un radical alkyle contenant de 1 à 4 atomes de carbone.

5. Procédé selon la revendication 4 caractérisé en ce qu'on copolymérise avec le composé vinylique un agent de réticulation choisi parmi les composés répondant aux formules

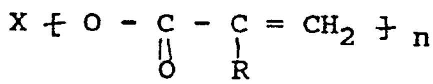

ou

$$Z \left[ Y - CH_2 - CH = CH_2 \right]_n$$

dans lesquelles :
R représente un atome d'hydrogène ou un radical méthyle
Y et Z représentent un groupement constitué de C, H et éventuellement d'un ou plusieurs atomes choisis parmi N, O, P, S, Si, F, Cl, I
Y représente un atome choisi parmi N, O, P, S
et $2 \leqq n \leqq 4$

6. Procédé selon la revendication 5 caractérisé en ce qu'on associe à 100 parties en poids du composé vinylique de 0 à 30 parties en poids d'agent de réticulation.

7. Procédé selon l'une des revendication 4 à 6 caractérisé en ce que le composé vinylique est la N-vinylpyrrolidone.

8. Procédé selon l'une des revendications 4 à 7 caractérisé en ce que les deux couches à lier, l'une au moins étant enduite du composé vinylique ou du copolymère, sont mises en contact intime sous pression à une température comprise entre 20 et 180°C.

9. Procédé selon l'une des revendications 4 à 8 caractérisé en ce que les matériaux à unir sont traités par irradiation après avoir été enduits de composé vinylique ou de copolymère.

**Patentansprüche**

1. Verbundmaterial, das aus einer Polyvinylidenfluoridschicht und einer Schicht eines mit dem Polyvinylidenfluorid unverträglichen Polymeren besteht, dadurch gekennzeichnet, daß die zwei Schichten durch ein Polymeres miteinander verbunden sind, das mit dem an das Polyvinylidenfluorid zu bindenden Polymeren verträglich ist und aus der Polymerisation einer Vinylverbindung der Formel

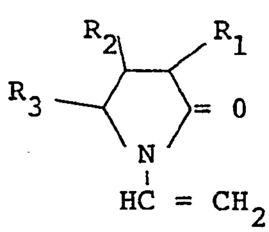

erhalten wird, in der $R_1$, $R_2$ und $R_3$ gleich oder verschieden sind und Wasserstoff oder einen 1 bis 4 Kohlenstoffatome enthaltenden Alkylrest bedeuten.

2. Material nach Anspruch 1, dadurch gekennzeichnet, daß die zwei Schichten durch ein Copolymeres verbunden sind, das aus der Copolymerisation der Vinylverbindung und eines Vernetzungsmittels erhalten wird, das aus den Verbindungen der Formel

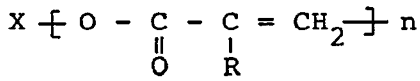

oder

$$Z-[Y-CH_2-CH=CH_2]-n$$

ausgewählt ist, in denen
R ein Wasserstoffatom oder einen Methylrest bedeutet,
Y und Z eine aus C, H und gegebenenfalls einem oder mehreren aus N, O, P, S, Si, F, Cl und I ausgewählten Atomen bestehende Gruppe bedeuten,
Y ein aus N, O, P und S ausgewähltes Atom bedeutet und
$2 \leqq n \leqq 4$ ist.

3. Material nach Anspruch 2, dadurch gekennzeichnet, daß das Copolymerisationsprodukt aus der Copolymerisation von 0 bis 30 Gewichtsteilen des Vernetzungsmittels auf 100 Gewichtsteile der Vinylverbindung erhalten wird.

4. Verfahren zur Herstellung eines Verbundmaterials, das aus einer Polyvinylidenfluoridschicht und einer Schicht eines mit dem Polyvinylidenfluorid unverträglichen Polymeren besteht, dadurch gekennzeichnet, daß man zwischen den zu verbindenden zwei Schichten (eine Zusammensetzung auf der Grundlage von) eine(r) mit einem Polymerisations-initiator verbundene(n) Vinylverbindung der Formel

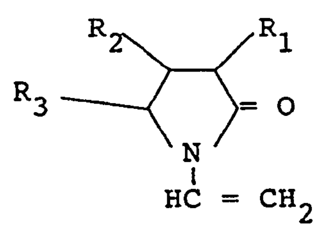

in situ polymerisiert, in der $R_1$, $R_2$ und $R_3$ gleich oder verschieden sind und Wasserstoff oder einen 1 bis 4 Kohlenstoffatome enthaltenden Alkylrest bedeuten.

5. Verfahren nach Anspruch 4, dadurch gekennzeichnet, daß man mit der Vinylverbindung ein Vernetzungsmittel copolymerisiert, das aus den Verbindungen der Formel

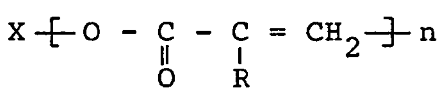

oder

$$Z-[Y-CH_2-CH=CH_2]-n$$

ausgewählt ist, in denen
R ein Wasserstoffatom oder einen Methylrest bedeutet,
Y und Z eine aus C, H und gegebenenfalls einem oder mehreren aus N, O, P, S, Si, F, Cl und I ausgewählten Atomen bestehende Gruppe bedeuten,
Y ein aus N, O, P und S ausgewähltes Atom bedeutet, und
$2 \leqq n \leqq 4$ ist.

6. Verfahren nach Anspruch 5, dadurch gekennzeichnet, daß man an 100 Gewichtsteile der Vinylverbindung 0 bis 30 Gewichtsteile des Vernetzungsmittels anlagert.

7. Verfahren nach einem der Ansprüche 4 bis 6, dadurch gekennzeichnet, daß die Vinylverbindung N-Vinylpyrrolidon ist.

8. Verfahren nach einem der Ansprüche 4 bis 7, dadurch gekennzeichnet, daß auf wenigstens eine der zwei zu verbindenden Schichten die Vinylverbindung oder das Copolymere aufgebracht ist und sie unter Druck bei einer Temperatur zwischen 20 und 180°C in innige Berührung gebracht werden.

9. Verfahren nach einem der Ansprüche 4 bis 8, dadurch gekennzeichnet, daß die zu verbindenden Materialien durch Bestrahlung behandelt werden, nachdem die Vinylverbindung oder das Copolymere aufgebracht worden ist.

## Claims

1. A composite material formed by a layer of polyvinylidene fluoride and a layer of polymer which is incompatible with polyvinylidene fluoride, characterized in that the two layers are bonded by a polymer resulting from the polymerization of a vinyl compound which is compatible with the polymer, to produce adhesion to the polyvinylidene fluoride and having the Formula

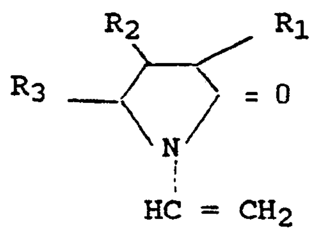

where $R_1$, $R_2$ and $R_3$, which are identical or different, denote hydrogen or an alkyl radical containing from 1 to 4 carbon atoms.

2. A material according to claim 1, characterized in that the two layers are bonded by a copolymer resulting from the copolymerization of the vinyl compound and a crosslinkage agent selected from compounds having the Formulae :

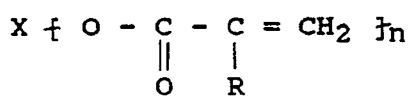

or

$$Z \left[ Y - CH_2 - CH = CH_2 \right]_n$$

where

R denotes a hydrogen atom or a methyl radical,

Y and Z denote a group formed by C, H and if necessary one or more atoms selected from N, O, P, S, Si, F, Cl, I,

Y denotes an atom selected from N, O, P, S

and $2 \leqq n \leqq 4$.

3. A material according to claim 2, characterized in that the copolymerization product results from the copolymerization of 0 to 30 parts by weight of crosslinkage agent to 100 parts by weight of the vinyl compound.

4. A process for the production of a composite material formed by a layer of polyvinylidene fluoride and a layer of polymer which is incompatible with polyvinylidene fluoride, characterized in that between the two layers to be caused to adhere, the polymerization is performed in situ, using a polymerization initiator, of a vinyl compound having the Formula

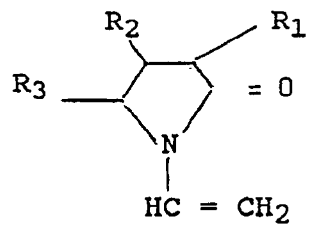

where $R_1$, $R_2$ and $R_3$, which are identical or different, denote hydrogen or an alkyl radical containing from 1 to 4 carbon atoms.

5. A process according to claim 4, characterized in that the copolymerization is performed with the vinyl compound of a crosslinkage agent selected from compounds having the Formulae :

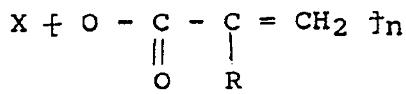

or

$$Z \left[ Y - CH_2 - CH = CH_2 \right]_n$$

where

R denotes a hydrogen atom or a methyl radical,

Y and Z denote a group formed by C, H and if necessary one or more atoms selected from N, O, P, S, Si, F, Cl, I,

Y denotes an atom selected from N, O, P, S

and $2 \leqq n \leqq 4$.

6. A process according to claim 5, characterized in that 0 to 30 parts by weight of crosslinkage agent are associated with 100 parts by weight of the vinyl compound.

7. A process according to one of claims 4 to 6, characterized in that the vinyl compound is N-vinyl pyrrolidone.

8. A process according to one of claims 4 to 7, characterized in that the two layers to be bonded, at least one of which is coated with the vinyl compound or the copolymer, are brought into intimate contact under pressure at a temperature of between 20 and 180°C.

9. A process according to one of claims 4 to 8, characterized in that the materials to be united are treated by irradiation after being coated with vinyl compound or copolymer.

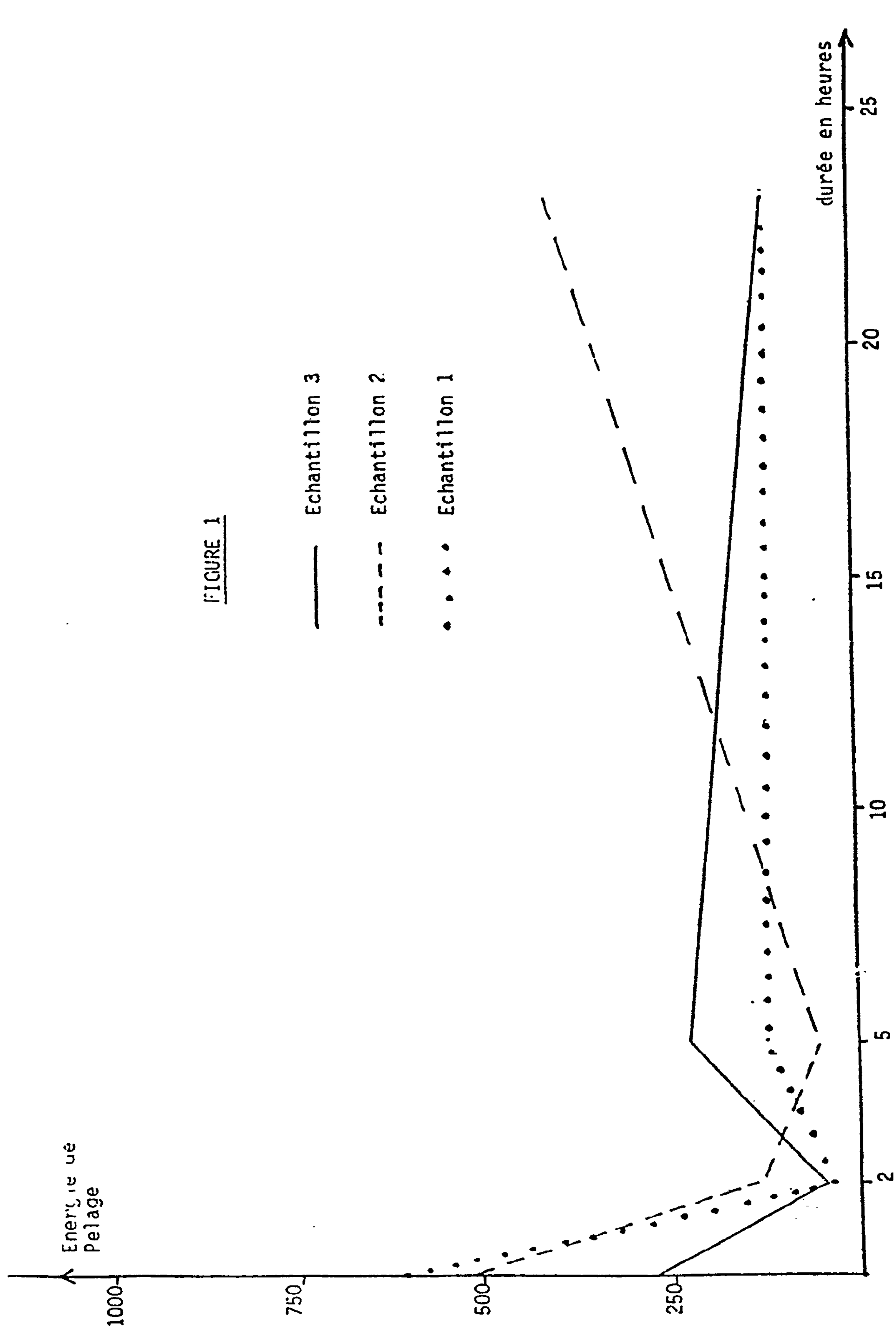
FIGURE 1
Echantillon 3
Echantillon 2
Echantillon 1
Pelage
1000
750
500
250
2
5
10
15
20
25
durée en heures

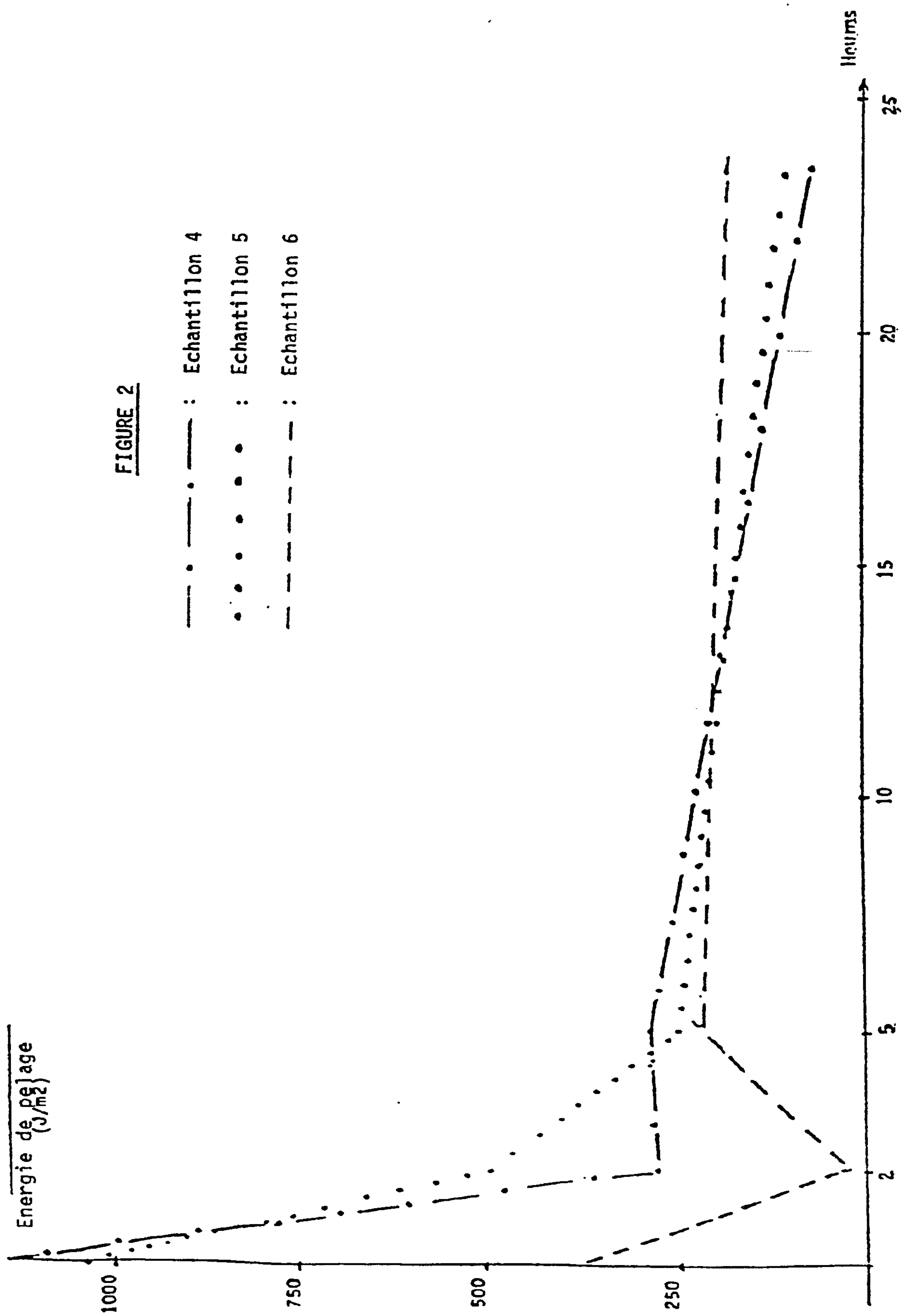
Energie de pelage (J/m2)
1000
750
500
250
2
5
10
15
20
25
Heures
Echantillon 4
Echantillon 5
Echantillon 6

FIGURE 2

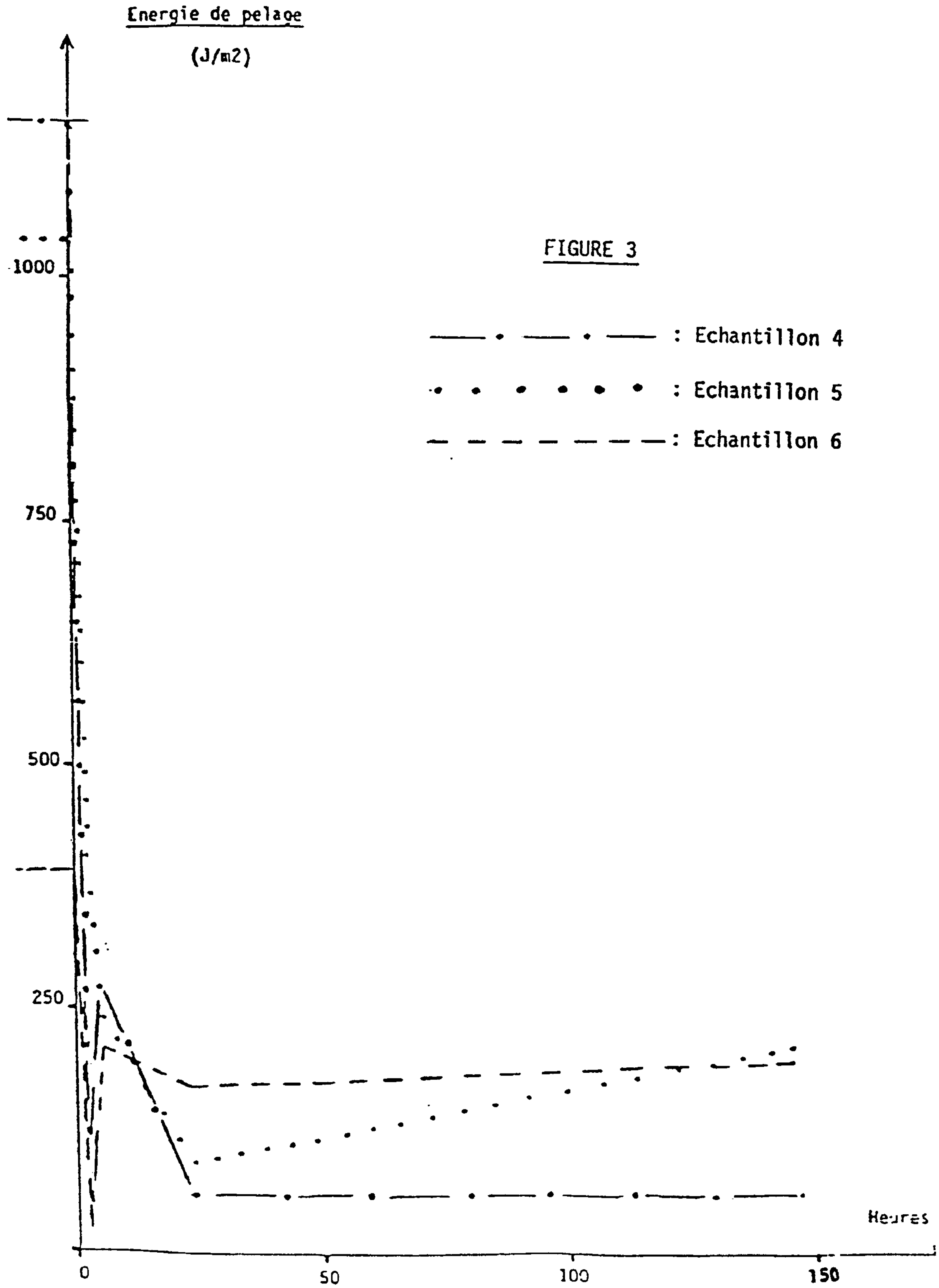
Energie de pelage
(J/m2)
1000
750
500
250
0
50
100
150
Heures
FIGURE 3
: Echantillon 4
: Echantillon 5
: Echantillon 6

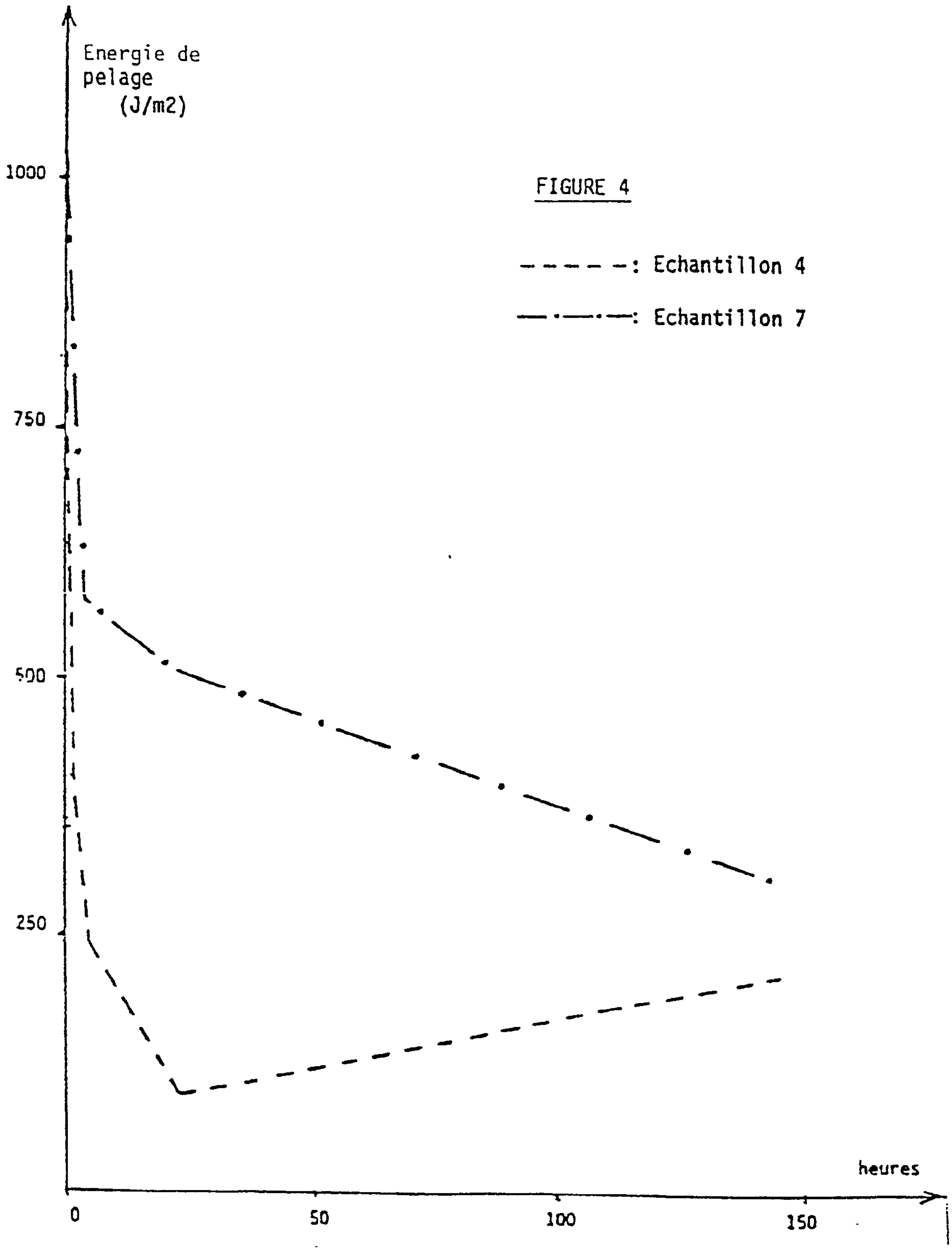
Energie de pelage (J/m2)
1000
750
500
250
FIGURE 4
- - - - -: Echantillon 4
—·—·—: Echantillon 7
heures
0
50
100
150